(19) Europäisches Patentamt
European Patent Office
Office européen des brevets

(11) **EP 2 280 209 B1**

(12) **EUROPÄISCHE PATENTSCHRIFT**

(45) Veröffentlichungstag und Bekanntmachung des Hinweises auf die Patenterteilung:
**09.05.2012  Patentblatt 2012/19**

(51) Int Cl.:
***F16L 43/00*** *(2006.01)*

(21) Anmeldenummer: **10169894.2**

(22) Anmeldetag: **16.07.2010**

(54) **Übergangsstück für die Umlenkung strömender Gase**

Transition piece for the dispersion of flowing gases

Pièce de raccordement pour la déviation de gaz s'écoulant

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.07.2009  DE 102009035558**

(43) Veröffentlichungstag der Anmeldung:
**02.02.2011  Patentblatt 2011/05**

(73) Patentinhaber: **Özpolat, Ilgaz
64385 Reichelsheim (DE)**

(72) Erfinder: **Özpolat, Ilgaz
64385 Reichelsheim (DE)**

(74) Vertreter: **Lieke, Winfried
WSL Patentanwälte
Kaiser-Friedrich-Ring 98
65185 Wiesbaden (DE)**

(56) Entgegenhaltungen:
**DE-U1-202005 017 821    JP-A- 59 131 799
US-A- 3 466 063    US-A- 3 920 271
US-A- 3 988 030    US-A- 5 145 217**

**Beschreibung**

Die Erfindung betrifft ein Übergangsstück für die Umlenkung strömender Gase von einer Zuströmungsrichtung um etwa 90° in eine Abströmungsrichtung, bestehend aus:

a) einem Umlenk-Formstück, dessen Zuström-Rohrteil etwa kreisförmigen Querschnitt und dessen Abström-Rohrteil abstromseitig etwa rechteckigen bis ovalen Querschnitt hat mit einer größeren Breite und einer kleineren Höhe und,
b) einem geraden, sich abstromseitig an das Abström-Rohrteil anschließenden Austrittsrohr desselben Querschnittes wie das Abström-Rohrteil.

Ein Übergangsstück der vorstehend beschriebenen Art ist für das Abführen von Küchendunst bekannt. Küchendunst, insbesondere Dämpfe, Abgase und dergleichen, strömen im allgemeinen zunächst von der verursachenden Stelle senkrecht in höhere Bereiche eines Raumes, zum Beispiel der Küche, und werden von dort nach außen transportiert, üblicherweise durch eine Außenwand unterhalb der Decke. Dort sind die strömenden Gase von der beispielsweise senkrechten Zuströmungsrichtung um etwa 90° in eine Abströmungsrichtung umzulenken. Für diese Umlenkung wird das bekannte Übergangsstück verwendet. Bei einer Ausführungsform besteht es aus einem Umlenk-Formstück und einem in Strömungsrichtung nachgeschalteten Austrittsrohr, das entweder in einen Raum außerhalb der Küche oder dergleichen endet oder in ein Rohr eines Rohrsystems mündet, durch welches die Gase ins Freie gefördert werden.

Ein solches Übergangsstück ist z.b. aus der US 3 988 030 bekannt.

Aus Platz- und/oder Normierungsgründen hat das Umlenkformstück ein Zuström-Rohrteil etwa kreisförmigen Querschnittes und außerhalb des betreffenden Raumes, zum Beispiel der Küche, ein Abström-Rohrteil mit rechteckigem Querschnitt. Dieses endet abstromseitig entweder außerhalb des Raumes im Freien oder mündet in ein Rohrsystem zum Abführen der Gase.

Aus bautechnischen Gründen besteht häufig nicht beliebig Platz für die Unterbringung für größere Rohrsysteme und für das Umlenken strömender Gase. Während Küchengeräte, Dunstabzugshauben und dergleichen häufig Rohre mit kreisförmigem Querschnitt haben, ist man abstromseitig schon dazu übergegangen, aus Platzgründen Rohre mit etwa rechteckigem Querschnitt zu verwenden. Das bekannte Übergangsstück muss daher die strömenden Gase nicht nur um etwa 90° aus ihrer Zustromungsrichtung in eine Abströmungsrichtung umlenken, sondern auch von einem etwa kreisförmigen Rohrquerschnitt in einen rechteckigen Rohrquerschnitt umleiten.

Aus strömungstechnischer Sicht sind selbst bei minimalem Raumbedarf nur minimale Druckverluste erwünscht. In der Praxis hat man festgestellt, dass bei einem stumpf auf das Rundrohr aufgesetzten Rechteckrohr hohe Druckverluste auftreten, die mit großer Geräuschentwicklung verbunden sind, wobei außerdem ein nicht unerheblicher Platzbedarf gegeben ist. Man hat festgestellt, dass die bei dem bekannten Übergangsstück auftretenden Druckverluste ihre Ursache in Reibungsverlusten an den Rohrwänden haben und hauptsächlich in den Verwirbelungsverlusten in Toträumen.

Der Erfindung liegt daher die Aufgabe zugrunde, das bekannte Übergangsstück der eingangs bezeichneten Art dahingehend zu verbessern, dass aus strömungstechnischer Sicht bei minimalem Raumbedarf minimale Druckverluste und geringe Geräuschentwicklung gegeben sind.

Die Lösung dieser Aufgabe gelingt mit der Erfindung dadurch, dass sich abstromseitig von dem Zuström-Rohrteil ein Diffusor mit sich in Zustromungsrichtung erweiterndem Durchmesser anschließt und das Abström-Rohrteil in Abströmungsrichtung unter Bildung einer Abflachung wenigstens mittig eine zunehmende Höhe hat. Die Erfindung hat ganz Abstand davon genommen, das Rechteckrohr stumpf auf das Rundrohr aufzusetzen. Vielmehr wird ein Umlenkformstück mit nachgeschaltetem Austrittsrohr eingesetzt mit den besonderen Merkmalen insbesondere für das Umlenkformstück. Dies hat zwar wie das bekannte Übergangsstück ein Zuström-Rohrteil etwa kreisförmigen Querschnittes, zusätzlich schließt sich aber in überraschender Weise abstromseitig ein Diffusor mit kreisförmigem Querschnitt an, der einen sich in Zuströmungsrichtung erweitemden Durchmesser hat.

Generell sind Diffusoren als Stücke eines Strömungskanals bekannt, dessen Strömungsquerschnitt sich allmählich in Strömungsrichtung so erweitert, dass die vom engen zum weiten Querschnitt erfolgende Strömung eine Geschwindigkeitsverminderung bei gleichzeitigem Druckanstieg erfährt. Der Einbau eines Diffusors ermöglicht unerwartet geringe Abmaße eines Übergangsstückes für die Umlenkung der strömenden Gase mit günstigen Einflüssen auf die Reibungsverluste der Gasteilchen an den Rohrwänden. Zusätzlich hat sich als besonders vorteilhaft erwiesen, wenn das Abström-Rohrteil in Abströmungsrichtung unter Bildung einer Abflachung wenigstens mittig eine zunehmende Höhe hat. In einem Vertikalschnitt durch das Umlenkformstück und damit auch das Abström-Rohrteil erkennt man den Umlenkwinkel von 90° für das strömende Gas, wobei letzteres gegen eine schräg angestellte ebene und vorzugsweise gekrümmte Abflachung strömt und dort umgelenkt wird. Diese Abflachung befindet sich an der der Zuströmrichtung nächsten Stelle in einer Höhe (h) über einer gedachten Ebene, die man durch das Austrittsende des Diffusors legt. Vom kleinsten Maß dieser Höhe h bis zum größten Maß nimmt die Höhe h dieser Abflachung zu. Wenn man den erwähnten Vertikalschnitt durch das Umlenkformstück mittig in Achshöhe legt, erfasst man den mittleren Bereich der Abflachung. An diesem ist die in Abströmungsrichtung zunehmende Höhe h deutlich ausgeprägt.

Mit Vorteil ist die Geräuschentwicklung bei strömenden Gasen trotz der Umlenkung um 90° gering, und auch die Druckverluste sind gering, weil gegenüber dem stumpf aufgesetzten Rechteckrohr auf das Rundrohr im Falle der Erfindung Toträume der Gase weitgehend entfallen.

Wenn bei weiterer vorteilhafter Ausgestaltung der Erfindung die Fläche des etwa rechteckigen Querschnittes (Höhe H x Breite B am abstromigen Ende des Abström-Rohrteiles) etwa gleich der Fläche des kreisförmigen Querschnittes ($\pi \times d^2/4$) des Zuström-Rohrteiles ist, dann bekommt man obere und untere Grenzwerte für die Höhe und die Breite des etwa rechteckigen Querschnittes. Der Fachmann kann der Lehre der Erfindung dann einfach folgen, weil er aus den ihm vorgegebenen Größen, zum Beispiel der Kreisdurchmesser des Kreisrohres, oder die Höhe und/oder Breite des Rechteckrohres, andere Grenzwerte berechnen kann. Dadurch erhält er günstige Parameter zur Lösung der gestellten Aufgabe. Will man für einige Ausführungsformen am Austrittsende des Diffusors etwa doch noch auftretende Toträume der strömenden Gase eliminieren, dann kann man erfindungsgemäß vorsehen, dass die bezüglich des Umlenkwinkels innere Außenwand des Abström-Rohrteiles eine den geometrischen Querschnitt des Rohrteiles verengende Wulst oder alternativ einen Keil aufweist. Bei der eingangs schon vorgenommenen idealen Modellbetrachtung ist man von einem Umlenkwinkel β von 90° ausgegangen. Betrachtet man nun das Umlenkformstück von unten, nämlich in Richtung des Zuström-Rohrteiles in Zuströmungsrichtung, dann blickt man direkt auf die sogenannte innere Außenwand des Abström-Rohrteiles. In dieser mündet auch das Austrittsende des Diffusors, wo bei bestimmten Ausführungsformen strömungstechnisch ein Totraum der Gase entstehen kann. Durch das Vorsehen einer Wulst oder alternativ eines Keiles im Bereich dieser inneren Außenwand des Abström-Rohrteiles kann man den Totraum verringern bis eliminieren. Geometrisch gesehen verengt die in Abströmungsrichtung der Gase zu erkennende Wulst den Querschnitt des Abström-Rohrteiles. Strömungstechnisch hingegen ergibt sich keine Verengung und damit auch nicht eine Erhöhung des Druckverlustes. Im Gegenteil wird durch Eliminieren oder Verringern des Totraumes der Druckverlust verringert bis eliminiert. Eine solche Wulst kann die Gestalt eines Hügels, einer kleinen Verdickung oder Barriere haben. Alternativ kann anstelle einer verengenden Wulst auch ein verengender Keil vorgesehen sein. Dieser kann zum Beispiel die Gestalt einer gebogenen Pyramide haben, wobei die Spitze der Pyramide in Strömungsrichtung der Gase abgelenkt erscheint. Der Keil kann Kanten haben oder auch abgerundet sein.

Günstig ist es für die Erfindung, wenn der Durchmesser des Zuström-Rohrteiles kleiner ist als die Breite des etwa rechteckigen bis ovalen Querschnittes. Dies begünstigt geringe Druckverluste und kleine Geräuschentwicklung.

Eine weitere vorteilhafte Ausgestaltung der Erfindung ist dadurch gekennzeichnet, dass der Durchmesser am Austrittsende des Diffusors kleiner oder gleich der Breite des etwa rechteckigen bis ovalen Querschnittes ist. Hierdurch ergeben sich günstige Übergänge der strömenden Gase mit derart geringen Druckverlusten, dass durch die Erfindung ein Übergangsstück mit minimalem Raumbedarf geschaffen ist.

Vorteilhaft ist es erfindungsgemäß auch, wenn das Abströmteil über dem ebenen Diffusoraustritt (in der durch diesen gelegten gedachten Ebene) eine Höhe h hat, wobei gilt $0 \leq h \leq H$. Mit anderen Worten kann die Höhe h des abgeflachten Teils des Abström-Rohrteiles zwischen den Extremwerten h = 0 mm und h = H mm liegen.

Unbeachtlich der Höhe h kann bei einer weiteren anderen Ausführungsform vorgesehen sein, dass die durch das Austrittsende des Diffusors gelegte, gedachte Ebene mit der Abflachung mittig einen Winkel α im Bereich von 3° bis 15°, bevorzugt von 5° bis 12° und besonders bevorzugt von 9° einschließen. Bei Versuchen hat man mit einem Winkel α von 9° die besten Strömungswerte gefunden, bei denen eine gleichmäßige Beschleunigung der strömenden Gase in das Rechteckrohr unter Verhinderung von Toträumen erreicht wird.

Man hat auch überraschend gefunden, dass in dem Diffusor konzentrisch ein zweiter Diffusor angeordnet werden kann, dessen Austrittsende in einem Abstand a über dem Austrittsende des ersten Diffusors in Strömungsrichtung hinausragt. Vorzugsweise ist die Länge des zweiten Diffusors in Achsrichtung kleiner als die Länge des Zuström-Rohrteiles in Achsrichtung. Gegebenenfalls können die Eintrittsenden der beiden Diffusoren im eingebauten Zustand bündig nebeneinander liegen, wobei dennoch der Abstand a am Austrittsende des ersten Diffusors (Überstand) beibehalten bleibt.

Weitere Vorteile, Merkmale und Anwendungsmöglichkeiten der vorliegenden Erfindung ergeben sich aus der folgenden Beschreibung bevorzugter Ausführungsbeispiele in Verbindung mit den anliegenden Zeichnungen. Bei diesen zeigt.

| | |
|---|---|
| Figur 1 | schematisch eine Vorderansicht des Übergangsstückes, bestehend aus Umlenk- formstück und Austrittsrohr, |
| Figur 2 | eine Seitenansicht des Übergangsstückes, |
| Figur 3 | eine Untersicht, wenn man in Figur 1 von unten nach oben blickt, |
| Figur 4 | eine Vorderansicht ähnlich der Figur 1, jedoch bei einer anderen Ausführungsform mit eingesetztem zweiten Diffusor, |
| Figur 5 | wieder eine Seitenansicht des Übergangsstückes nach Figur 4, wenn man in Figur 4 von links nach rechts blickt, |

Figur 6        eine Untersicht des Übergangsstückes mit den zwei Diffusoren,

Figuren 7 bis 9        unterschiedliche Ausführungsformen vorzugsweise des zweiten Diffusors und

Figur 10        eine schematische Darstellung der strömenden Gase durch ein Übergangsstück nach den Figuren 1 bis 3.

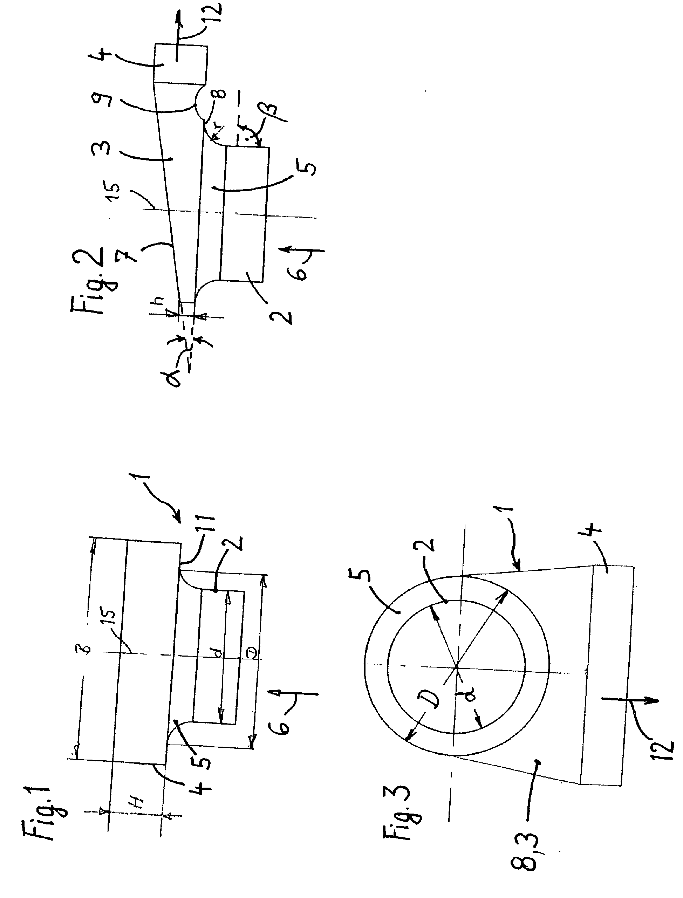

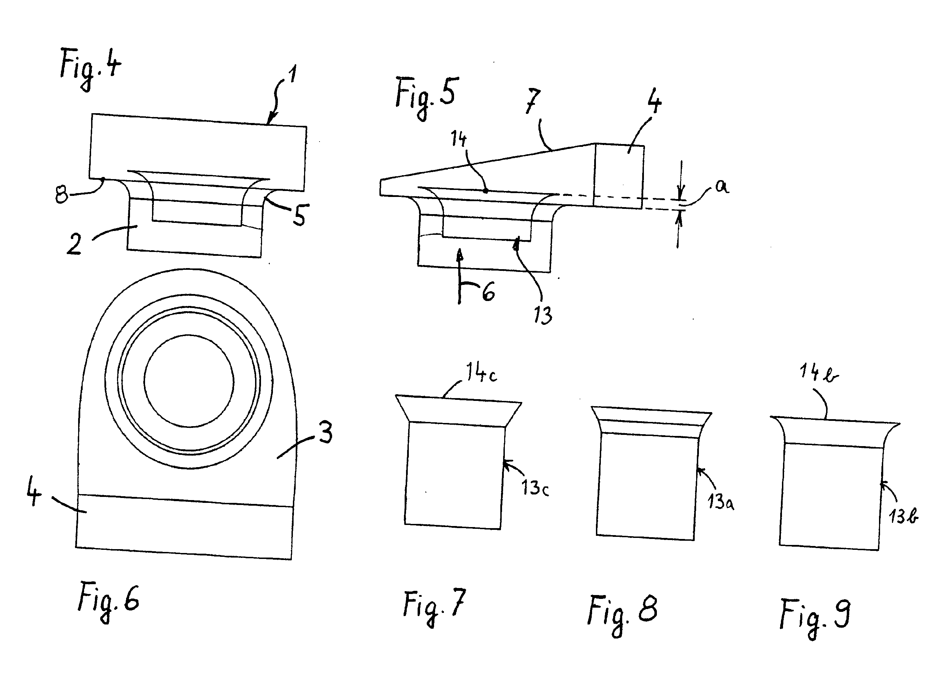

Das in den Figuren 1 bis 3 einerseits und den Figuren 4 bis 6 andererseits dargestellte Übergangsstück zeigt Ähnlichkeiten bei den Ausführungsformen, wobei bei ähnlichen Teilen gleiche Bezugszahlen verwendet sind.

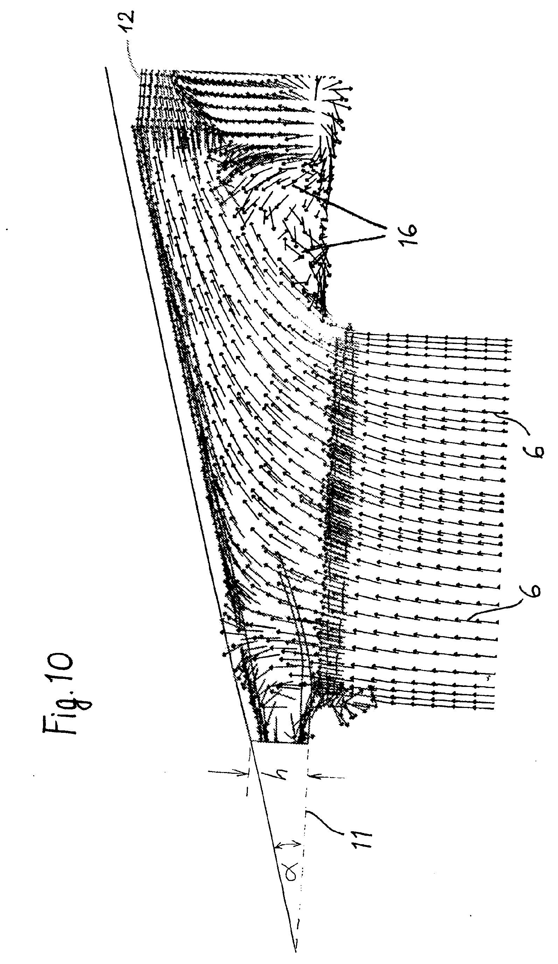

Bei der Ansicht der Figur 1 blickt man entgegen der Strömungsrichtung der Gase auf das abstromseitige Ende des Austrittsrohres 4, welches einen rechteckigen Querschnitt mit größerer Breite B und kleinerer Höhe H hat. Außer dem Austrittsrohr 4 besteht das Übergangsstück aus einem Umlenkformstück 1, welches seinerseits drei Teile hat, nämlich in Strömungsrichtung von unten nach oben ein Zuström-Rohrteil 2, einen Diffusor 5 und ein Abström-Rohrteil 3. In Strömungsrichtung 6 (Zuströmung) bis 12 (Abströmung) (die Gasströmung ist in Figur 10 durch kleine Pfeile dargestellt) schließt sich an das Zuström-Rohrteil 2 (in diesem speziellen Falle unten) (nach oben hin) der Diffusor 5 an, dessen Durchmesser D sich in Zuströmungsrichtung 6 erweitert. In Strömungsrichtung schließt sich daran das Abström-Rohrteil 3 an, welches die strömenden Gase schließlich in Abströmungsrichtung 12 leitet.

Die Seitenansicht der Figur 2 zeigt deutlich die Bildung der Abflachung 7, die entgegen der Strömungsrichtung ein kleines Ende des Abström-Rohrteiles bildet, wobei mittig die Abflachung 7 auf der Höhe h über einer Ebene 11 endet, welche durch das Austrittsende des Diffusors gelegt gedacht ist. Am größten Ende des Abström-Rohrteiles 3 ist die Höhe h des Abström-Rohrteiles 3 maximal angewachsen auf die Höhe H des rechteckigen Querschnittes des Abström-Rohrteiles 3 auf der Abstromseite. Stellt man sich die Paperebene der Figur 2 als einen Vertikalschnitt durch das Übergangsstück durch die Achse 15 vor, dann hat der Raum des Abström-Rohrteiles 3 etwa die Form eines Dreieckes oder Trapezes.

Aus der Untersicht der Figur 3 sieht man den kreisförmigen Querschnitt des Zuström-Rohrteiles 2 mit dem Durchmesser d. Das Austrittsende des Diffusors 5 liegt in einer Ebene und hat den Durchmesser D. Dieses Austrittsende liegt in einer Ebene, welche eine gedachte Ebene 11 ist.

In dieser liegt auch die sogenannte innere Außenwand 8 des Abström-Rohrteiles 3, weshalb man in Figur 3 bei der Betrachtung des Abström-Rohrteiles 3 auf diese innere Außenwand 8 blickt, die nach unten in Abströmrichtung 12 in die untere Wand des Austrittsrohres 4 übergeht. Denkt man sich in der Seitenansicht der Figur 2 die Wulst 9 weg, dann erkennt man den bündigen Übergang dieser inneren Außenwand 8 in die untere Wand des Austrittsrohres 4, die alle in der gedachten Ebene 11 liegen.

In Figur 2 erkennt man auch den Umlenkwinkel β, der hier 90° beträgt. Es handelt sich um denjenigen Winkel, um welchen die Gase aus der Zuströmungsrichtung 6 (parallel zu der Längsmittelachse 15 des Zuström-Rohrteiles 2) in die Abströmungsrichtung 12 strömen. Der eine Schenkel des Winkels β liegt parallel zu der Achse 15, und der andere, in Figur 2 gestrichelt gezeichnete Schenkel des Umlenkwinkels β liegt parallel zu der Abströmungsrichtung 12, sozusagen auch parallel zu der Längsachse des Austrittsrohres 4.

Der Diffusor ist in Draufsicht kreisrund, zumal er sich an das kreisförmige Zuström-Rohrteil 2 anschließt. Von dieser Übergangsebene zwischen Zuström-Rohrteil 2 und Diffusor 5 erweitert sich der Durchmesser des Diffusors auf das Maß D, welches in der erwähnten gedachten Ebene 11 gemessen wird. In der Untersicht der Figur 3 erkennt man, dass der halbe Umfang des Diffusors 5 an seinem Austrittsende halbkreisförmig ist mit einer Höhe h, die zwischen 0 und H liegt. Die andere, in Figur 3 untere Hälfte des Diffusorumfanges mündet in die oben definierte innere Außenwand 8 des Abström-Rohrteiles 3. Von der in Figur 3 oben und in Figur 2 links gezeigten Seite entsteht das in Abströmungsrichtung 12 sich allmählich vergrößernde Volumen des Abström-Rohrteiles 3. Im Abstand gegenüber der inneren Außenwand 8 befindet sich oben die Abflachung 7, die zwar eine ebene Fläche sein kann, vorzugsweise aber eine in der Mitte höher liegende und zu beiden Seiten von dieser nach außen tiefer liegende gebogene Fläche ist. Dadurch ergibt sich das Volumen des Abström-Rohrteiles 3, welches abstromseitig zunimmt, weil die der inneren Außenwand 8 gegenüberliegende Linie der Abflachung 7 unter einem Winkel α gegenüber der ebenen Außenwand 8 angestellt ist. Dieser Winkel α beträgt bei einer besonderen und bevorzugten Ausführungsform der Erfindung 9°. Der Winkel α ist in den Figuren 2 und 10 dargestellt.

Insbesondere aus den Figuren 1 und 2 erkennt man, dass die Erweiterung des Diffusors in Zuströmungsrichtung 6 von dem Durchmesser d des Zuström-Rohrteiles 2 bis zum Durchmesser D des Diffusors in einer gleichmäßigen Biegung erfolgt, deren Teilkreisradius r vorzugsweise gleichbleibend ist.

Der Winkel α, um welchen die Abflachung 7 mittig gegen die Ebene 11 angestellt ist, kann auch dann seinen Wert behalten, wenn die Höhe h des Abström-Rohrteiles 3 auf null verringert wird.

In diesem Falle nimmt die Querschnittsfläche des Abström-Rohrteiles 3 in der Darstellung der Figur 2 die Gestalt eines Dreieckes an.

In Figur 10 ist die Strömung in Form kleiner Pfeile für ein Abström-Rohrteil 3 etwa der Form in Figur 2 dargestellt. Man erkennt, dass am Austrittsende des Diffusors 5 in seinem dem Austrittsrohr 4 nächstliegenden Bereich (in den Figuren 3 und 6 zum Beispiel unten) ein Totraum 16 entstehen kann, der zu unerwünschten Druckverlusten führt. Um diesen zu vermeiden, ordnet man in diesem Bereich die in Figur 2 in Seitenansicht dargestellte Wulst 9 an, welche den geometrischen Querschnitt des Rohrteiles 3 verengt. Anstelle einer Wulst kann man nebeneinander auch mehrere Wulste vorsehen. Alternativ ordnet man im Bereich dieses Totraumes 16 einen Keil an, der bei einer besonders bevorzugten Ausführungsform die Gestalt einer in Strömungsrichtung gebogenen Pyramide hat. Dadurch wird der Totraum vermieden, und der unerwünschte Druckabfall wird geringer bis eliminiert. Man verlässt dann das Strömungsbild der Figur 10. Die Verwirbelungen fallen dann wesentlich kleiner aus, und der Druckabfall ist geringer. Die Pfeile in Figur 10 befinden sich bei ähnlicher Darstellung im Außenrohr in größerem Abstand zueinander.

Weitere Vorteile ergeben sich für geringere Geräuschentwicklung und geringeren Druckverlust bei einer - zum Beispiel in den Figuren 4 bis 6 gezeigten - besonderen Ausführungsform, bei welcher konzentrisch in dem oben bereits erwähnten Diffusor 5 ein zweiter Diffusor 13, 13a, b, c angeordnet ist. Es hat sich in der Praxis gezeigt, dass das Austrittsende 14, 14a, b, c in einem Abstand a über dem Austrittsende des ersten Diffusors 5 in Richtung der strömenden Gase, zum Beispiel Richtung 6, hinausragen sollte.

In Figur 9 ist ein gekrümmt sich abstromseitig erweiternder zweiter Diffusor 13b gezeigt, dessen Erweiterungsform ähnlich dem ersten Diffusor derart ist, dass sich zwischen den beiden Diffusoren 5 und 13b ein durchströmter Ringraum ergibt.

In Figur 8 erweitert sich der zweite Diffusor 13a abstromseitig über zwei Kegelstumpfflächen. Dieser zweite Diffusor 13a erweitert sich also nicht kontinuierlich über den Bogen mit gleichbleibendem Radius r, sondern erweitert sich in zwei Stufen entsprechend den zwei aufgesetzten Kegelstümpfen.

In Figur 7 ist schließlich die Erweiterung des zweiten Diffusors 13c am abstromseitigen Ende in Form eines einzigen Kegelstumpfes gezeigt, durch welchen auch wieder ein Austrittsende 14c vorgegeben wird.

Im Betrieb kann man die Fläche des rechteckigen Querschnitte H x B am abstromseitigen Ende des Abström-Rohrteiles 3 gleich der Fläche des kreisförmigen Querschnittes π x $d^2$/4 des Zuström-Rohrteiles 2 gestalten. Dann lassen sich für die Höhe und Breite des rechteckigen Querschnittes obere und untere Grenzwerte, zum Beispiel $B_{min}$, $H_{max}$, $B_{max}$, $H_{min}$ berechnen.

Bei Verwendung eines Diffusors gilt:

$$B_{min} = D = d + 2r$$

mit r = Radius der Diffusoröffnung. Die zweite oben erwähnte Vorgabe mit dem Gleichsetzen der Fläche des Querschnittes des Rundrohres einerseits und des Rechteckrohres andererseits ergibt

$$\frac{\pi \cdot d^2}{4} \approx H \cdot B$$

daraus folgt:

$$\frac{H \bullet B}{d^2} \approx \frac{\pi}{4} = KONST$$

Aus den vorstehenden Vorgaben ergeben sich für einen vorgegebenen Durchmesser d des Zuström-Rohrteiles 2 obere und untere Grenzwerte für die zugehörigen Abmessungen H und B am abstromseitigen Ende des Abström-Rohrteiles 3.

So gilt für ein Zuström-Rohrteil 2 mit dem Durchmesser d = 150 mm und einem Radius r der Öffnung des Diffusors 5: r = 15 mm

$$B_{min} = 180 \text{ mm und } H_{max} = 98 \text{ mm}$$

Abhängig von vorgegebenen und gegebenenfalls standardisierten Abmessungen der Rund- und Rechteckrohre sind entsprechende Anpassungen möglich.

Die Höhe h des Abström-Rohrteiles 3 kann zwischen den Extremwerten h = 0 mm und h = H mm liegen.

### Patentansprüche

1. Übergangsstück für die Umlenkung strömender Gase von einer Zustromungsrichtung (6) um etwa 90° in eine Abströmungsrichtung (12), bestehend aus

   - a) einem Umlenk-Formstück (1), dessen Zuström-Rohrteil (2) etwa kreisförmigen Querschnitt und dessen Abström-Rohrteil (3) abstromseitig etwa rechteckigen bis ovalen Querschnitt hat mit einer größeren Breite (B) und einer kleineren Höhe (H), und
   - b) einem geraden, sich abstromseitig an das Abström-Rohrteil (3) anschließenden Austrittsrohr (4) desselben Querschnittes wie das Abström-Rohrteil (3),
   **dadurch gekennzeichnet, dass**
   - sich abstromseitig von dem Zuström-Rohrteil (2) ein Diffusor (5) mit kreisförmigem Querschnitt mit sich in Zuströmungsrichtung (6) erweiterndem Durchmesser (D) anschließt und
   - das Abström-Rohrteil (3) in Abströmungsrichtung (12) unter Bildung einer Abflachung (7) wenigstens mittig eine zunehmender Höhe (h) hat.

2. Übergangsstück nach Anspruch 1, **dadurch gekennzeichnet, dass** die Fläche des etwa rechteckige Querschnitt (H x B) am abstromigen Ende des Abström-Rohrteiles (3) etwa gleich der Fläche des kreisförmigen Querschnitts ($\pi$ x $d^2/4$) des Zuström-Rohrteiles (2) ist mit der Folge

   sich ergebender oberer und unterer Grenzwerte ($B_{min}$, $H_{max}$; $B_{max}$, $H_{min}$) für die Höhe und Breite des etwa rechteckigen Querschnittes (H x B).

3. Übergangsstück nach Anspruch 1 oder 2, **dadurch gekennzeichnet, dass** die bezüglich des Umlenkwinkels ($\beta$) innere Außenwand (8) des Abström-Rohrteiles (3) eine den geometrischen Querschnitt des Rohrteiles (3) verengende Wulst (9) oder alternativ einen Keil aufweist.

4. Übergangsstück nach einem der Ansprüche 1 bis 3, **dadurch gekennzeichnet, dass** der Durchmesser (d) des Zuström-Rohrteiles (2) kleiner ist als die Breite (B) des etwa rechteckigen bis ovalen Querschnittes.

5. Übergangsstück nach einem der Ansprüche 1 bis 4, **dadurch gekennzeichnet, dass** der Durchmesser (D) am Austrittsende des Diffusors (5) kleiner oder gleich der Breite (B) des etwa rechteckigen bis ovalen Querschnittes ist.

6. Übergangsstück nach einem der Ansprüche 1 bis 5, **dadurch gekennzeichnet, dass** das Abströmteil (3) über dem ebenen Diffusoraustritt (in der gedachten Ebene (11)) eine Höhe (h) hat, wobei gilt $0 \le h \le H$.

7. Übergangsstück nach einem der Ansprüche 1 bis 6, **dadurch gekennzeichnet, dass** die durch das Austrittsende des Diffusors (5) gelegte, gedachte Ebene (11) mit der Abflachung (7) mittig einen Winkel ($\alpha$) im Bereich von 3° bis 15°, bevorzugt von 5° bis 12° und besonders bevorzugt von 9° einschließt.

8. Übergangsstück nach einem der Ansprüche 1 bis 7, **dadurch gekennzeichnet, dass** in dem Diffusor (5) konzentrisch ein zweiter Diffusor (13a, 13b) angeordnet ist, dessen Austrittsende (14a, b. c) in einem Abstand (a) über dem Austrittsende des ersten Diffusors (5) in Strömungsrichtung (6) hinausragt.

**Claims**

1. A transitional portion for the deflection of flowing gases from a feed flow direction (6) through about 90° into a discharge flow direction (12), comprising

   a) a shaped deflection portion (1) whose feed flow tube portion (2) is of an approximately circular cross-section and whose discharge flow tube portion (3) at the discharge flow end is of an approximately rectangular to oval cross-section with a larger width (B) and a smaller height (H), and
   b) a straight outlet tube (4) adjoining the discharge flow tube portion (3) at the discharge flow end and of the same cross-section as the discharge flow tube portion (3),
   **characterised in that**

   - a diffuser (5) of circular cross-section of a diameter (D) increasing in the feed flow direction (6) is adjoined at the discharge flow end from the feed flow tube portion (2), and
   - the discharge flow tube portion (3) in the discharge flow direction (12) is at least centrally of an increasing height (h) forming a flat portion (7).

2. A transitional portion according to claim 1 **characterised in that** the area of the approximately rectangular cross-section (H x B) at the discharge flow end of the discharge flow tube portion (3) is approximately equal to the area of the circular cross-section ($\pi$ x $d^2/4$) of the feed flow tube portion (2), with the consequence of

   resulting upper and lower limit values ($B_{min}$, $H_{max}$; $B_{max}$, $H_{min}$) for the height and width of the approximately rectangular cross-section (H x B).

3. A transitional portion according to claim 1 or claim 2 **characterised in that** the outside wall (8), that is inward with respect to the deflection angle ($\beta$), of the discharge flow tube portion (3) has a bead (9) constricting the geometrical cross-section of the tube portion (3) or alternatively a wedge.

4. A transitional portion according to one of claims 1 to 3 **characterised in that** the diameter (d) of the feed flow tube portion (2) is smaller than the width (B) of the approximately rectangular to oval cross-section.

5. A transitional portion according to one of claims 1 to 4 **characterised in that** the diameter (D) at the outlet end of the diffuser (5) is less than or equal to the width (B) of the approximately rectangular to oval cross-section.

6. A transitional portion according to one of claims 1 to 5 **characterised in that** the discharge flow portion (3) over the flat diffuser outlet (in the notional plane (11)) is of a height (h), wherein $0 \le h \le H$.

7. A transitional portion according to one of claims 1 to 6 **characterised in that** the notional plane (11) through the outlet end of the diffuser (5) centrally includes with the flat portion (7) an angle ($\alpha$) in the range of 3° to 15°, preferably 5° to 12° and particularly preferably 9°.

8. A transitional portion according to one of claims 1 to 7 **characterised in that** arranged concentrically in the diffuser (5) is a second diffuser (13a, 13b) whose outlet end (14a, b, c) projects at a spacing (a) beyond the outlet end of the first diffuser (5) in the flow direction (6).

**Revendications**

1. Raccord destiné à dévier des écoulements de gaz d'une direction d'entrée (6) à une direction de sortie (12) sur à peu près 90°, ledit raccord étant constitué

   a) d'un élément de déviation profilé (1) dont la partie tubulaire d'entrée (2) a une section sensiblement circulaire et dont la partie tubulaire de sortie (3) a du côté de la sortie une section sensiblement rectangulaire à ovale avec une largeur (B) relativement grande et une hauteur (H) relativement faible, et
   b) un tube de sortie (4) rectiligne qui est de même section que la partie tubulaire de sortie (3) et qui se raccorde du côté de la sortie à la partie tubulaire de sortie (3),
   **caractérisé en ce que**

   - un diffuseur (5), de section circulaire et de diamètre (D) s'élargissant dans la direction d'entrée (6), se raccorde à la sortie de la partie tubulaire d'entrée (2), et
   - la partie tubulaire de sortie (3) a, au moins au milieu, une hauteur croissante (h) dans la direction de sortie (12) en formant un méplat (7).

2. Raccord selon la revendication 1, **caractérisé en ce que** l'aire de la section sensiblement rectangulaire (H x B) à l'extrémité côté sortie de la partie tubulaire de sortie (3) est sensiblement égale à l'aire de la section circulaire ($\pi$ x d$^2$/4) de la partie tubulaire d'amenée (2) de sorte que l'on obtient des valeurs supérieures et inférieures ($B_{min}$, $H_{max}$ ; $B_{max}$, $H_{min}$) pour la hauteur et la largeur de la section sensiblement rectangulaire (H x B).

3. Raccord selon la revendication 1 ou 2, **caractérisé en ce que** la paroi extérieure (8), du côté intérieur par rapport à l'angle de déviation ($\beta$), de la pièce tubulaire de sortie (3) a un renflement (9) réduisant la section géométrique de la partie tubulaire (3) ou en variante un élément cunéiforme.

4. Raccord selon l'une des revendications 1 à 3, **caractérisé en ce que** le diamètre (d) de la partie tubulaire d'entrée (2) est inférieur à la largeur (B) de la section sensiblement rectangulaire à ovale.

5. Raccord selon l'une des revendications 1 à 4, **caractérisé en ce que** le diamètre (D) à l'extrémité de sortie du diffuseur (5) est inférieur ou égal à la largeur (B) de la section sensiblement rectangulaire à ovale.

6. Raccord selon l'une des revendications 1 à 5, **caractérisé en ce que** la partie de sortie (3) a au-dessus de la sortie plane du diffuseur (dans le plan imaginaire (11)) une hauteur (h), avec $0 \leq h \leq H$.

7. Raccord selon l'une des revendications 1 à 6, **caractérisé en ce que** le plan imaginaire (11), s'étendant sur l'extrémité de sortie du diffuseur (5) forme avec le méplat (7), au milieu, un angle ($\alpha$) de l'ordre de 3° à 15°, de préférence de 5° à 12°, et de façon particulièrement préférée de 9°.

8. Raccord selon l'une des revendications 1 à 7, **caractérisé en ce que** dans le diffuseur (5) est disposé concentriquement autour d'un deuxième diffuseur (13a, 13b) dont l'extrémité de sortie (14a, b, c) fait saillie sur une distance (a) au-dessus de l'extrémité de sortie du premier diffuseur (5) dans la direction d'écoulement (6).

Fig.2

Fig.1

Fig.3

EP 2 280 209 B1

Fig. 4

Fig. 5

Fig. 6

Fig. 7

Fig. 8

Fig. 9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3988030 A